# EUROPEAN PATENT SPECIFICATION

(11) **EP 3 635 695 B1**
(45) Date of publication and mention of the grant of the patent: **06.04.2022**
(21) Application number: 18732245.8
(22) Date of filing: 07.06.2018
(51) Int. Cl.: G07D 7/1205

(54) **A VALIDATION SYSTEM AND METHOD FOR AUTHENTICATION OF RECYCLABLE CONTAINERS**
VALIDIERUNGSSYSTEM UND -VERFAHREN ZUR AUTHENTIFIZIERUNG WIEDERVERWENDBARER BEHÄLTER
SYSTÈME ET PROCÉDÉ DE VALIDATION DESTINÉ À L'AUTHENTIFICATION DE CONTENANTS RECYCLABLES

(30) Priority: 07.06.2017 DK PA201770443
(43) Date of publication of application: 15.04.2020
(73) Proprietor: Dansk Retursystem A/S, 2640 Hedehusene (DK)
(72) Inventor: HENRIKSEN, Per, 3660 Stenl se (DK)
(74) Representative: Patentgruppen A/S
(86) International application number: PCT/DK2018/050125
(87) International publication number: WO 2018/224107

(56) References cited:
- EP-A1- 2 538 369
- WO-A1-01/54077

## Description

### Field of the invention

The invention relates to methods for handling recyclable containers, particularly to such methods for performing authentication of recyclable containers.

### Background of the invention

Recyclable containers such as bottles, cans, bags, boxes or other may be provided with security marks for facilitating automated authentication of recyclable containers before refunding a deposit to a person who returns a container to a collection system. Such collection systems for receiving recyclable containers from users may be provided with a detection system for performing automated authentication of recyclable containers.

DE102006011143A1 discloses a collection system and a method for authentication recyclable containers. The method for authentication utilises a security mark which comprises portions printed with an ink which is visible when illuminated with light in the visible and infra-red spectra and other portions which is printed with another ink which is only visible in the visible spectrum, but invisible for a camera when illuminated with light in the infra-red spectrum. According to the method the security mark can be authenticated by analysing the pictured portions of the security mark which appears in a recorded image when the security mark is illuminated with infrared light.

The method in DE102006011143A1 requires significant time for performing the authentication. Accordingly, there is a need for reducing the time required for authentication of recyclable containers as well as a need for reducing the total time for processing a single recyclable container. WO 01/54077 A1 discloses the preamble of claim 1.

### Summary of the invention

In a first aspect of the invention there is provided a method for validating the authenticity of a security mark on a recyclable container. The method comprises the steps of:
- moving the recyclable container past one or more security mark detection means,
- illuminating at least a part of the security mark with light within a first wavelength range,
- detecting a first reflection value of the security mark by means of the security mark detection means when the security mark is illuminated with light within the first wavelength range,
- transmitting the first reflection value from the detection means to a central validation unit,
- illuminating at least a part of the security mark with light within a second wavelength range, wherein the first wavelength range is different from the second wavelength range,
- detecting a second reflection value of the security mark by means of the security mark detection means when the security mark is illuminated with light within the second wavelength range,
- transmitting the second reflection value from the security mark detection means to the central validation unit, and
- validating the authenticity of the security mark in the central validation unit by checking if the first reflection value and the second reflection value are within predefined ranges.

The term *"security mark detection means"* in this context should be interpreted as any kind of detector suited for detecting a security mark, e.g. the graphical appearance, i.e. any device comprising an imaging or non-imaging device including a camera, a light beam scanner, a laser scanner or other optical system capable of capturing reflected light from the security mark or combinations thereof. The device may additionally include light sources for illumination purposes and/or processing circuits for analyzing the captured reflected light.

The reflection values may be in the form of analogue values or digitally formatted representations of the reflection values. In any case, the time required for transmitting the reflection value from the detection means to the central validation unit is very short, at least short compared to transmission of digital images in that the data containing the reflection value is much simpler and smaller than data containing an image.

The central validation unit may be placed locally, e.g. within an enclosure or room which also contains other components of the validation system. Alternatively, the central validation unit may be placed externally, possibly remote from the installation of the validation system and possibly connected via the transferring means, e.g. in the form of an internet connection and/or a telecommunication connection.

Since the central validation unit may be operated and controlled by an authorised company or organisation, the central validation unit may need to be separate from the security mark detection means e.g. to prevent fraud. For that reason, it may be required to send the reflection data to the central validation unit for further processing, instead of performing the further processing e.g. in the security mark detection means.

Since the validation of the authenticity of the security mark is based on a simple comparison process of the reflection values with other values and since the reflection values can be transmitted to the validation unit very fast, the determination of the validity and determination of a refund of a deposit can be performed very quickly. Accordingly, the central validation unit may return with a command signal to the security mark detection means, e.g. a command signal to instruct the conveying means to return the container to the user in case of an invalid security mark, within short time limits. In this way the time required for authentication of recyclable containers and the total time for processing a single recyclable container may be shortened.

Advantageously, since the present authentication process does not require transmission of image files - which may take a significant amount of time - at least a part of the authentication process may be performed faster. According to known methods, transmission of image files may be performed in order to transfer image files to a processor capable of performing image analysis, e.g. verification of locations and shapes of pictured portions of the security mark for the purpose of authentication of the security mark.

According to an embodiment the first wavelength range is turned off before the security mark is illuminated with light within the second wavelength range. Advantageously, by sequentially illuminating the security mark with light having different wavelength ranges, it is possible to obtain two or more reflectance values corresponding to two or more different reflectance values of the spectrally dependent reflectance of the security mark.

According to an embodiment, the light within the first wavelength range is generated by a first light source and the light within the second wavelength range is generated by a second light source. Advantageously, instead of using spectral filters in front of light sources, light sources such as LED lights having different spectral properties may be used.

According to an embodiment the same one or more security mark detection means detects both the first reflection value and the second reflection value. Advantageously, by sequentially illuminating the security mark with light having different wavelengths ranges, only one detector is required for detecting the two or more reflection values.

According to an embodiment the method further comprises the steps of:
- illuminating at least a part of the security mark with light within a third wavelength range,
- detecting a third reflection value of the security mark by means of the security mark detection means when the security mark is illuminated with light within the third wavelength range,
- transmitting the third reflection value from the detection means to the central validation unit.

Advantageously, by detecting three or more reflection values based on three or more wavelength ranges, the validity of a security mark may be determined with improved certainty. Similarly, an invalid security mark may be determined with improved accuracy which may be particularly relevant in case of attempts to tamper the security mark.

According to an embodiment, the reflection values are detected by:
- capturing one or more images of the recyclable container by means of the security mark detection means,
- analysing the one or more images in the security mark detection means to identify at least a part of the security mark,
- establishing the reflection values on the base of a grey-scale value of the at least a part of the security mark.

Determination of the reflection values based on an identified part of the security mark advantageously provides a method for determining the reflection values for specific parts of the security mark, e.g. parts having been printed with an ink having known reflection properties. Pixel values of the identified part of the security mark may be in the form of grey-scale values corresponding to a captured light energy. Accordingly, the grey-scale values may be obtained from a grey-scale or a colour image sensor.

According to an embodiment, the reflection values are detected on the fly as the recyclable container is moved past the one or more security mark detection means. Advantageously, the reflection values may be detected on the fly, i.e. as the container is moved - without stopping or stopping for a short time - past the security mark detection means since the security mark detection means only needs to capture images. Processing of the image for determining the reflection values may be determined during or after the period where images are captured, e.g. between subsequent image captures.

According to an embodiment, the security mark detection means is configured to transmit the detected reflection values sequentially, i.e. at different times, in order of detection. Accordingly, the reflection values may be determined sequentially, e.g. in order to initiate a refusal of the container before receiving the last reflection values. Subsequent transmission of reflection values may enable a simpler design of the security mark detection means, since storage and transmission protocols for transmission of a plurality of reflection values may be dispensed with.

According to an embodiment, the security mark detection means is configured to transmit all of the detected reflection values after detection of the last detected reflection value. Transmission of all detected reflection values after detection of the last detected reflection value, may be an advantage, e.g. when subsequent reflection values are detected very fast, or in order to enable a simplified design of the receiving unit of the central validation unit.

According to an embodiment the authenticity of the security mark is validated by means of a validation system according to any of the any of the validation systems discussed in the following.

A second aspect of the invention relates to a validation system for validating the authenticity of a security mark on a recyclable container, the system comprises
conveying means for conveying the recyclable container in the validation system,
one or more security mark detection means arranged to detect more than one reflection value of the security mark,
a first light source arranged to illuminate the security mark with light within a first wavelength range,
a second light source arranged to illuminate the security mark with light within a second wavelength range, wherein the first wavelength range is different from the second wavelength range,
transferring means for transferring the reflection values from the one or more security mark detection means to
a central validation unit arranged to check if the first reflection value and the second reflection value are within predefined ranges.

It is advantageous to detect the reflection values of the security mark and then only transfer these simple values to the central validation unit, in that the validation in the central validation unit hereby can happen faster due to faster transmission and processing of the simple values. At the same time, it is ensured that the validation can take place in a separate central validation unit e.g. belonging to a different company, a state institution or other so that the manufacturer of the reverse vending machine or similar equipment is not involved or responsible for the actually validation - which could trigger reimbursement of deposit value. The improved transmission and processing rate also entails that it could be possible to detect and validate the security mark on the fly.

The term *"conveying means"* in this context should be interpreted as any kind of conveying means suited for transporting or guiding containers, i.e. any kind of motor-driven or non-driven conveying means, e.g. any kind of driven chain, roller or belt conveyors, non-driven roller conveyors, a slide, a tube for guiding a container being moved under action of gravity, or other or combinations thereof.

The term *"transferring means"* in this context should be interpreted as any means suited for transferring information in digital or analogue form, i.e. any kind of wired or wireless connection, including optical fibers, electrical wires, optical communication over air, radio-frequency connections, internet connections, wi-ficonnections, or other or combinations thereof.

According to an embodiment, the security mark detection means comprises a camera and picture analysing means. It may be an advantage to use a camera since the reflection values can be determined based on a portion of the security mark as captured by the camera.

In this context the term *"picture analysing means"* should be understood as any kind of data processer, computer, logic circuit or any other kind of picture analyser suited for analysing a picture to identify different parts of an illustration on the basis of its visual appearance.

According to an embodiment the one or more security mark detection means comprises more than three security mark detection means arranged in a circular array around the conveying means. Advantageously, by arranging the security mark detection means around the conveying means, the container may not need to be reoriented in order to capture an image of the security mark.

According to an embodiment the one or more security mark detection means comprises more than three first light sources arranged in a circular array around the conveying means and more than three second light sources also arranged in a circular array around the conveying means. Advantageous, by arranging the light sources around the conveying means, it is possible to obtain a uniform illumination of the container around its circumference.

According to an embodiment the security mark is arranged to be visible when illuminated with light within the first wavelength range and when illuminated with light within the second wavelength range. Advantageously, the security mark is visible, i.e. visible for the camera, both when the security mark is illuminated with the first and the second wavelength range so that the portion(s) of the security mark from which the reflection value has to be determined can be identified.

According to an embodiment the central validation unit comprises memory means in which the predefined ranges are stored. The predefined ranges may advantageously be stored in the central validation unit, since the central validation unit may be operated by a company or organisation that is responsible for refunding container deposits.

According to an embodiment, the first wavelength range is contained within a visible spectrum and the second wavelength range is contained within an infrared spectrum. Illuminating the security mark with light within both a visible range and an infrared range it may be advantageous for determining reflection values having a sufficiently large difference for enabling unique determination of the authenticity of the container.

### Figures

Embodiments of the invention will be described, by way of example only with reference to the drawings, in which
Fig. 1 shows a validation system,
Fig. 2 shows an embodiment of the validation system comprising a plurality security mark detection means,
Fig. 3 shows an example of a security mark with a relatively low reflectivity,
Fig. 4 shows an example of a security mark with a relatively high reflectivity,
Fig. 5 shows an example of reflectance values obtained from a security mark.

### Description of embodiments

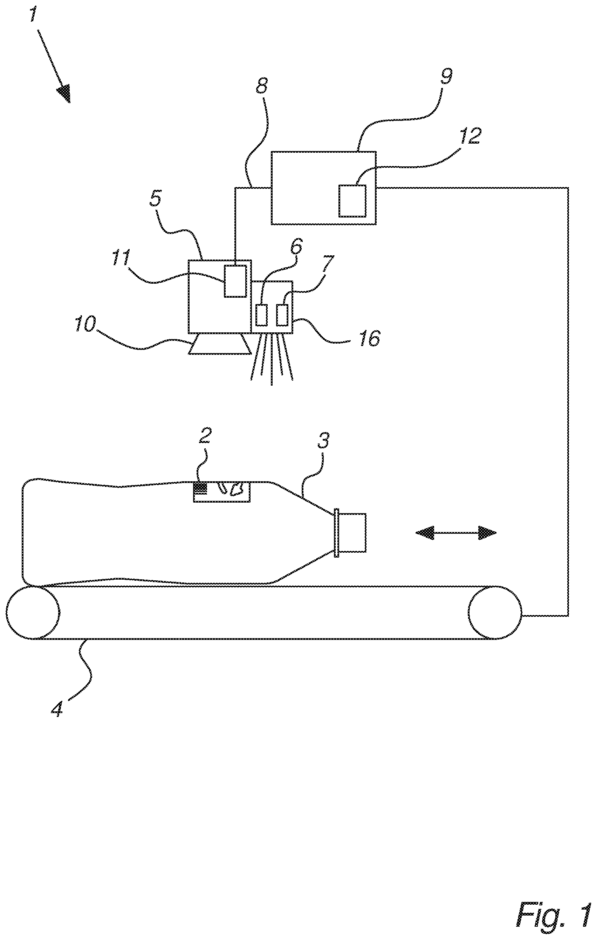

Fig. 1 shows a validation system 1 for validating the authenticity of a security mark 2 on a recyclable container 3. The system comprises conveying means 4 for conveying the container 3 to one or more security mark detection means 5 arranged to detect reflection values of at least a part of the security mark 2. The system 1 further comprises first and second light sources 6, 7 arranged to illuminate the security mark 2 with light within first and second wavelength ranges, respectively.

The first and second light sources 6, 7 may be arranged as individual light devices comprising e.g. LED or laser light sources. The light sources 6, 7 may be part of the mark detection means 5 or the light sources 6, 7 may be located in the validation system 1 separate from the mark detection means 5.

The first and second light sources 6, 7 may be controllable independent of each other to emit a variable light intensity, e.g. to emit a light intensity from zero to maximum. For example, the first light source 6 may be controlled to emit a maximum intensity, or a fraction of the maximum intensity, and the second light source 7 may, at the same time, be controlled to be turned off. Similarly, the second light source 7 may be controlled to emit a maximum intensity, or a fraction of the maximum intensity, and the first light source 6 may, at the same time, be controlled to be turned off. Thus, the first wavelength range may be turned off before the security mark 2 is illuminated with light within the second wavelength range. Accordingly, within a first period of time, the security mark 2 may be illuminated with light within the first wavelength range and, within a second period of time the security mark 2 may be illuminated with light within the second wavelength range. The second period of time may start after the start of the first period of time, e.g. after the end of the first period of time or possibly so that the second period of time starts before the first period of time has ended.

The detected reflection values are transferred to a central validation unit 9. The transfer may be performed via transferring means 8. The transferring means may comprise a wired connection, a wireless connection or a combination of a wired or wireless connection.

The central validation unit 9 is arranged to check if the first reflection value and the second reflection value are within certain ranges, e.g. predefined ranges, or close to predefined reference reflection values. Alternatively or additionally, the validation unit may be configured to determine if a combination of the first and second reflection values satisfies certain predefined requirements. As an example, if the reflection values are within predefined ranges, the central validation unit 9 may send a command to the conveying means 4 to move the container to other handling devices, e.g. a container sorting device. Alternatively or additionally, if values are within the predefined ranges, the central validation unit 9 may register a value or deposit corresponding to the authenticated security mark to be returned a user. If the reflection values are not within the predefined ranges, the conveying means 4 may be instructed to return the container 3 to the user since the security mark 2 is not recognised as valid.

The central validation unit 9 be placed locally, e.g. within an enclosure or room which also contains other components of the validation system. Alternatively, the central validation unit 9 may be placed externally, possibly remote from the installation of the validation system 1 and possibly connected via the transferring means 8, e.g. in the form of an internet connection and/or a telecommunication connection.

Since an authorised company or organisation may be authorised to handle the assets of the recyclable containers 3, the authorisation of the containers 3 and refunding deposits may need to take place in the central validation unit 9 which is operated and controlled by the authorised company or organisation. Accordingly, the processing unit 11 may not be suited for, or may not be capable of, carrying out the authorisation process, or at least a part of the authorisation process such as the final decision of validity and refunding. For that reason, it may be necessary to send data obtained from the security mark 2, here reflection data, to the central validation unit 9 for further processing.

The security mark detection means 5 may be configured as a combination of camera 10 and picture analysing means 11. The camera 10 may be a digital camera configured with a digital image chip, e.g. CCD or CMOS image chip. The analysing means 11 is arranged to analyse at least a part of the digital image recorded by the image chip, i.e. a digital image of at least a part of the security mark 2.

The validation system 1 may be configured to adjust an orientation of the container 3 so that one of the one or more security mark detection means 5 are able to capture an image of at least a part of the security mark 2. Alternatively or additionally, the validation system 1 may be configured with one or more security mark detection means 5, e.g. more than two or three security mark detection means 5 arranged around the conveying means 4, e.g. in a circular array, so that at least one of the security mark detection means 5 are able to capture at least a part of the security mark 2.

Furthermore, the validation system 1 may comprise two or more, e.g. three, first light sources 6 arranged around the conveying means, e.g. in a circular array, and two or more, e.g. three, second light sources 7 also arranged around the conveying means 5.

The analysing means 11 may be configured as an electronic circuit capable of analysing the digital image. The electronic circuit may comprise a processor arranged to process software program instructions stored in the electronic circuit for performing the analysis.

The analysis performed by the analysing means 11 may include image analysis to identify portions of the security mark 2. After portions of the security mark 2 has been identified, the light intensity values of one or more pixels of the identified image may be analysed to determine one or more reflection values of one or more portions of the pictured security mark 2.

The light intensity values of at least a part of the security mark may be in the form of grey-scale values. The grey scale values may be obtained by converting intensity values from a colour image sensor to grey-scale values. Alternatively, a grey-scale image sensor may be used in the security mark detection means 5 for capturing images of the security mark 2, so that the grey-scale intensity values are obtained directly from the image sensor.

The determination of the reflection values may be performed by comparing the light intensity values of one or more pixels of the pictured security mark 2 with intensity values of pixels of a pictured reference portion. The reference portion may be a part of the security mark 2, e.g. an area having a white or bright colour. Alternatively or additionally, the reference portion could include a surface of the validation system which is pictured together with the security mark 2.

Alternatively or additionally, the determination of the reflection values may be performed by comparing the light intensity values of one or more pixels of the pictured security mark 2 with an intensity of light emitted by one of the light sources 6,7. The intensity of emitted light could be determined by measuring the intensity, e.g. by use of a photodiode, or the emitted light could be a predetermined valve of a light intensity stored in a memory of the security mark detection means 5.

By determining the reflection values on basis of light intensity values of one or more pixels of the pictured security mark 2 and of basis of intensity values of pixels of a pictured reference portion and/or on basis of an intensity of light emitted by one of the light sources 6, 7, the determined reflection values become independent of variations of the emitted light intensity. By utilising intensity values of pixels of a pictured reference portion, the determined reflection values may be less sensitive to stains and dirt on the security marks 2.

Since the security mark 2 may be illuminated sequentially by the first and second light sources 6, 7, a single detection means 5 may determine both the first reflection value and the second reflection value.

The validation system 1 may be configured with three or more light sources having three or more different corresponding wavelength ranges. For example, the validation system 1 may comprise one or more first, second and third light sources 6, 7 arranged to illuminate the security mark 2 with light within first, second and third wavelength ranges 13, 14, where first, second and third wavelength ranges are different. The difference of the wavelength ranges 13, 14 may be present in terms of different centre wavelengths of spectral intensity profiles, i.e. the spectral location of peak intensity may be different for first, second and/or third light sources 6,7. The difference of the wavelength ranges may also be present in terms of different spectral ranges of the light sources, where a spectral range refers to a wavelength range where the light intensity is above a given minimum threshold. The different wavelength ranges may be spectrally overlapping or non-overlapping.

Accordingly, by using first, second and third light sources the security mark can be illuminated sequentially with light within different first, second and third wavelength ranges. By analysing captured images of the security mark having been illuminated with light within the three different wavelength ranges it is possible to determine three reflection value of the security mark for the purpose of determining the authenticity of the security mark 2.

The conveying means 4 may be configured to move the container 3 forward during the period of time when the images are recorded, and the reflection values are determined. Accordingly, the container 3 may be moved between subsequently captured images and subsequently determined reflection values. Similarly, the container 3 may be moved during capturing each image.

In order to obtain the reflection values on the fly as the recyclable container 3 is moved past the security mark detection means 5, the security mark detection means may be arranged to determine or detect the reflection values in real time, i.e. within a short delay after the security mark 2 has been illuminated with one of the different wavelength ranges. In this way it is possible to reject a container 3 - if the container is not authenticated - before the container is leaves the conveying means 4.

The security mark detection means 5 may be configured to transmit the detected reflection values sequentially, i.e. at different times, in order of detection. Accordingly, the first reflection value may be sent before the determination of the second or third reflection value has been completed. Accordingly, each of the reflection values may be transmitted immediately after the determination of the reflection values has been completed.

Alternatively, the security mark detection means 5 may be configured to transmit all of the detected reflection values after the last detected reflection value of a security mark 2 of a given container 3. Accordingly, the security mark detection means 5 may comprise a memory for storing reflection values as they are successively determined. The plurality of detected reflection values may be transmitted in succession after the last reflection value has been determined or they may be transmitted as a single data package.

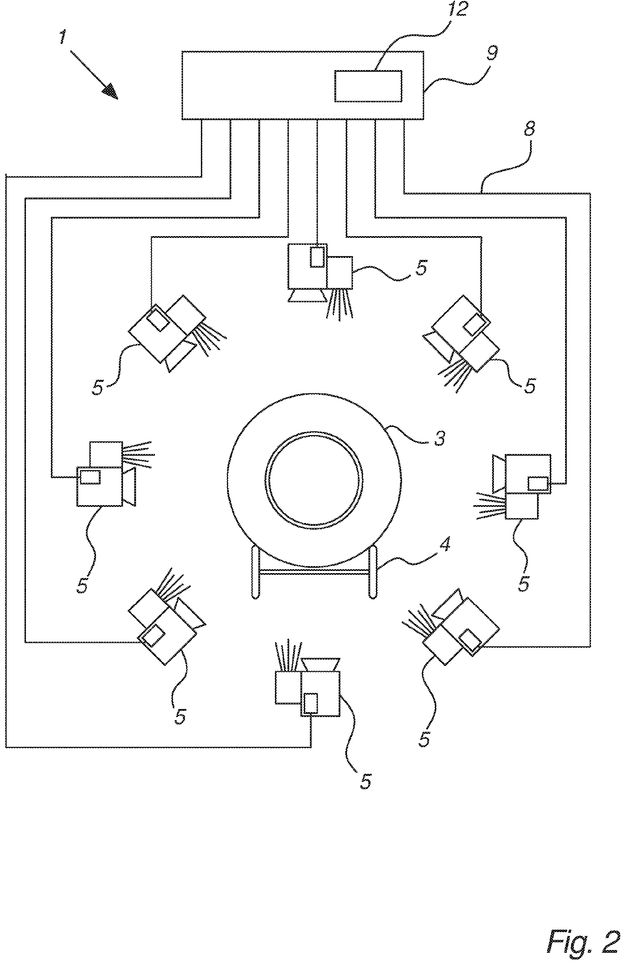

Fig. 2 illustrates an embodiment of the invention where the validation system 1 comprises a plurality security mark detection means 5, here eight security mark detection means 5, arranged in a circular array around the conveying means. The security mark detection means 5 corresponds to the one described in connection with

Fig. 1 and, therefore, reference signs for components of the detection means are not provided in Fig. 2. In general, the plurality of security mark detection means 5 may be arranged around the conveying means 4, along a circular or other geometrically shaped path, so that the cameras 10 of the security mark detection means 5 facing the conveying means 4 are located at different angular positions of a circle circumscribing the transportation direction of the conveying means 4.

As illustrated, each of the security mark detection means 5 has an associated light unit 16. Each of the light units 16 may comprise at least first and second light sources 6, 7 (not illustrated). However, in alternative embodiments one or more light units 16 - or first and second light sources 6, 7 - may be arranged separate from the security mark detection means, e.g. in the space between security mark detection means 5. Accordingly, the validation system 1, e.g. the plurality of security detection means 5, may comprise more than three first light sources 6 arranged around the conveying means, e.g. in a circular array, and more than three second light sources 7 arranged in a similar way array around the conveying means 4. Each of the security detection means 5 are configured to send detected reflection values to the central validation unit 9 by means of the transferring means 8.

By means of the location of the plurality of security mark detection means 5 and the plurality of light sources 6, 7 arranged around the transportation direction of the conveying means 4, it may not be necessary to perform a reorientation of the container 3 to ensure that the security mark 2 can be pictured.

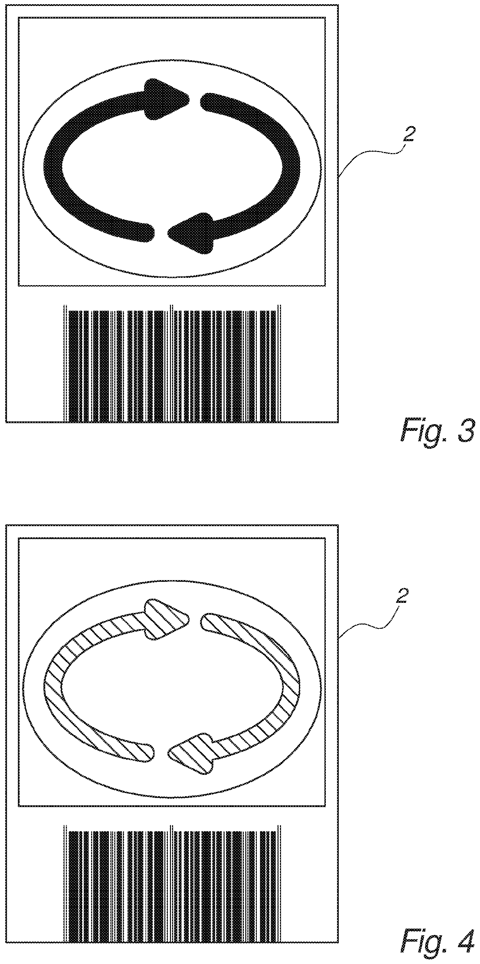

Figs. 3 and 4 show an example of a security mark 2. At least a portion of the security mark 2 is printed with an ink which has a reflectance which is dependent on the wavelength of the incident light. In this example of a security mark 2, the two arrows of the recycling pictogram have been printed with a special wavelength-dependent ink. Figure 2 shows the appearance of the security mark 2 when it is illuminated with light within a first wavelength range. The wavelength-dependent ink has a relatively low reflectance when illuminated within the first wavelength range and therefore has a dark appearance as shown in Fig. 3. The wavelength-dependent ink has a relatively higher reflectance when illuminated within the second wavelength range and therefore has a brighter appearance as shown in Fig. 4.

The authentication of the security mark 2 based on reflectance values R may be supplemented with one or more additional authentication procedures. For example, in an additional authentication procedure, the analysing means 11 or other processing means may be configured to perform image analysis for the purpose of determining if the pictured illustration is valid. For example, the shape of an illustration (e.g. the arrows) may be analysed and compared with a reference shape to determine if the illustration is valid. For example, the determined shape may be compared with a reference shape. According to another additional authentication procedure, a barcode of the security mark may be processed to obtain a numerical representation of the code, e.g. by a laser-scanning or by image analysis of the pictured image. The numerical representation of the code may be compared with a reference, e.g. after decryption, in order to determine the authenticity of the barcode.

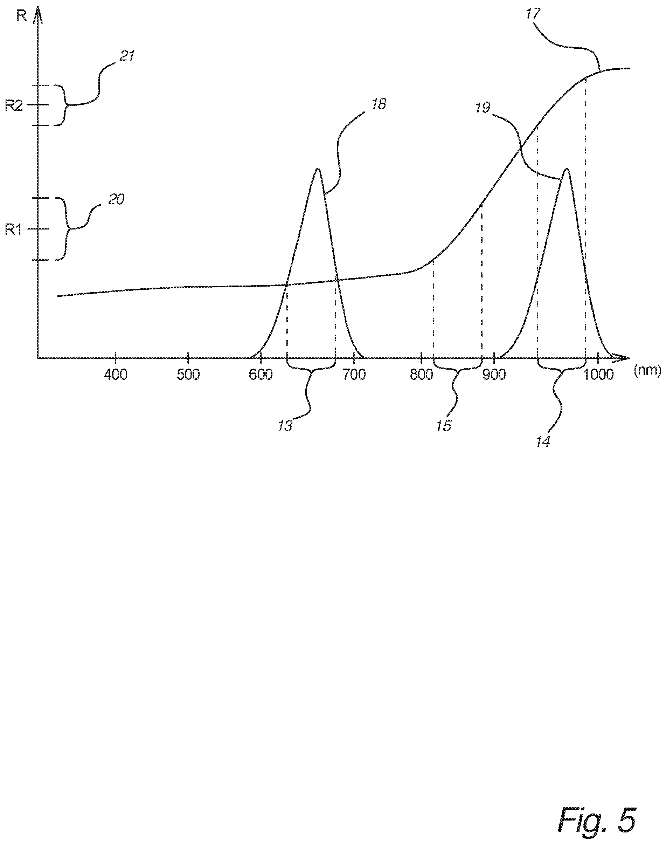

Fig. 5 shows an example of reflectance values R of a spectral reflectance profile 17 of the wavelength-dependent ink as a function of the wavelength λ in units of nm. The wavelength-dependent ink may have a profile in terms of the reflectance dependency of the wavelength which is unique, i.e. which is not present in other available inks. Accordingly, by detecting two or more reflectance values of a part of the security mark 2 and by comparing the detected reflectance values with predefined ranges or values, which may be stored in central validation unit 9, or other components of the validation system 1, it is possible to determine if the security mark 2 has been printed with the valid ink or if the security mark has been printed with a non-valid ink and, thereby, tampered.

Fig. 5 shows first, second and third wavelength ranges 13, 14, 15 of light emitted by first, second and third light sources, respectively. As previously explained, embodiments of the invention may utilize two or more wavelength ranges, which are different. Fig. 5 shows the spectral amplitude profiles 18, 19 of light intensity emitted by the first and second light sources 6, 7. As shown from the spectral profiles 18, 19, the light may contain wavelengths outside the wavelength ranges and the wavelengths from the first profile 18 may overlap with the wavelengths of the second profile 19. However, even if the spectral profiles 18, 19 may contain overlapping wavelength areas, it is understood that the first and second wavelength ranges 13, 14 are different. For example, the difference between two wavelength ranges 13, 14 may be understood by the difference in the locations of wavelength ranges of amplitudes of the spectral profiles 18, 19 above a given threshold or the difference in the wavelength of the peak amplitude of the spectral profiles 18, 19.

As shown in Fig. 5, the first wavelength range 13 may be contained within a visible spectrum, e.g. a range from 390 to 700 nm, and the second wavelength range 14 may be contained within an infrared spectrum, e.g. a range from 700 nm to 1400 nm. However, the wavelength ranges could be located elsewhere.

Fig. 5 illustrates a detected first reflectance value R1 and a detected second reflectance value R2 which have been detected by sequentially illuminating the security mark with light within first and second wavelength ranges, respectively, according to the methods described above. The authenticity of the security mark 2 may be verified by checking if the first reflection value R1 is contained within a first predefined range 20 and by checking if the second reflection value R2 is contained within a second predefined range 21. Additionally or alternatively, the authenticity of the security mark 2 may be verified by comparing one or more of the detected reflectance values with other one or more detected reflectance values, e.g. by comparing the first reflectance value with the second reflectance value. In general, the authenticity of the security mark 2 may be verified by comparing the first, second and possibly further reflection values R1, R2 with a respective first, second and further predefined values or ranges 20, 21 and/or by comparing one or more of the detected reflectance values R1, R2 with other one or more detected reflectance values R1, R2.

The predefined values or ranges 20, 21 may be stored in a memory means 12 comprised by the central validation unit 9.

The detected reflectance values R1, R2 of a valid security mark 2, may deviate from corresponding reflectance values of the spectral reflectance profile 17, e.g. due to variations in the spectral profiles 18, 19 of different light sources 6, 7. However, since the spectral reflectance profile 16 is unique, the combination of the at least first and second reflectance values R1, R2 is also unique and may therefore be used for validating a security mark. In an embodiment, due to the possible variations in detected reflectance values, the predefined ranges or predefined values for comparing with the detected reflectance values may be determined from reflection detections of a reference ink, e.g. a reference security mark 2. Alternatively, the predefined ranges or predefined values may be determined from the reflectance values of the spectral reflectance profile 17.

In the following table 1 we have included a specific example of an ink suitable for printing a security mark 2 suitable for being validated by a method and validation system according to the present invention.

**Table 1. Oxidative drying inks (wet offset)**

| | Composition |
|---|---|
| Ingredients | wt.% |
| Varnish I | 29.5 |
| Alkyd resin (Uralac AD 85, from DSM) | |
| Varnish II | 40.3 |
| (40 parts phenolic/alkylphenolic resins cooked in 40 parts tung oil and dissolved in 20 mineral oil (PKWF 6/9 af, from Haltermann)) | |
| Pigments | 10.0 |
| X-form phthalocyanine pigment, e.g. unsubstituted metal-free dihydrogeno-phthalocyanine (Pc-H2) in the crystallographic | |
| X-form | 7.0 |
| CI Pigment Red 146 | 2.5 |
| CI Pigment Orange 34 | 3.0 |
| CI Pigment Yellow 13 | |
| Wax (PE wax) (Lawter) | 3.5 |
| Antioxidant | 0.2 |
| (tert-butyl hydroquinone) (Sigma Aldrich) | |
| Drier blend | 4.0 |
| *Co-octoate* CAS [136-52-7*] 20-50wt%* | |
| *Mn-octoate* CAS [13434-24-7*] 20-50wt%* | |
| *C12-C18-hydrocarbons* CAS [93924-45-9*] 20-50wt%* | |
| *Fatty acids* CAS [61789-52-4*] 1-5wt%* | |

The invention has been exemplified above with reference to specific examples of security marks 2, recyclable containers 3, security mark detection means 5 and other. However, it should be understood that the invention is not limited to the particular examples described above but may be designed and altered in a multitude of varieties within the scope of the invention as specified in the claims.

### References

- 1.: Validation system
- 2.: Security mark
- 3.: Recyclable container
- 4.: Conveying means
- 5.: Security mark detection means
- 6.: First light source
- 7.: Second light source
- 8.: Transferring means
- 9.: Central validation unit
- 10.: Camera
- 11.: Analysing means
- 12.: Memory means
- 13.: First wavelength range
- 14.: Second wavelength range
- 15.: Third wavelength range
- 16.: Light unit
- 17.: Spectral reflectance profile
- 18.: First spectral amplitude profile
- 19.: Second spectral amplitude profile
- 20.: First predefined range
- 21.: Second predefined range
- R1.: First reflectance value
- R2.: Second reflectance value

## Claims

1. A method for validating the authenticity of a security mark (2) on a recyclable container (3) said method comprising the steps of:
• moving said recyclable container past one or more security mark detection means (5),
• illuminating at least a part of said security mark with light within a first wavelength range (13), **characterized by**
• detecting a first reflection value (R1) of said security mark by means of said security mark detection means when said security mark is illuminated with light within said first wavelength range (13),
• transmitting said first reflection value from said detection means (5) to a central validation unit (9),
• illuminating at least a part of said security mark with light within a second wavelength range (14), wherein said first wavelength range (13) is different from said second wavelength range (14),
• detecting a second reflection value (R2) of said security mark by means of said security mark detection means (5) when said security mark is illuminated with light within said second wavelength range (14),
• transmitting said second reflection value from said detection means (5) to said central validation unit (9), and
• validating the authenticity of said security mark (2) in said central validation unit (9) by checking if said first reflection value (R1) and said second reflection value (R2) are within predefined ranges.

2. A method according to claim 1, wherein said light within said first wavelength range (13) is turned off before said security mark is illuminated with light within said second (14) wavelength range.

3. A method according to claim 1 or 2, wherein said light within said first wavelength range (13) is generated by a first light source (6) and wherein said light within said second wavelength range (14) is generated by a second light source (7).

4. A method according to any of the preceding claims, wherein the same one or more security mark detection means (5) detects both said first reflection value (R1) and said second reflection value (R2).

5. A method according to any of the preceding claims, wherein said method further comprises the steps of:
• illuminating at least a part of said security mark (2) with light within a third wavelength range (15),
• detecting a third reflection value of said security mark (2) by means of said security mark detection means (5) when said security mark is illuminated with light within said third wavelength range (15), and
• transmitting said third reflection value from said detection means (5) to said central validation unit (9).

6. A method according to any of the preceding claims, wherein said reflection values are detected by:
• capturing one or more images of said recyclable container (3) by means of said security mark detection means (5),
• analysing said one or more images in said security mark detection means to identify at least a part of said security mark (2), and
• establishing said reflection values (R1, R2) on the base of a grey-scale value of said at least a part of said security mark (2).

7. A method according to any of the preceding claims, wherein said reflection values (R1, R2) are detected on the fly as said recyclable container (3) is moved past said one or more security mark detection means (5).

8. A method according to any of the preceding claims, wherein said authenticity of said security mark (2) is validated by means of a validation system (1) according to any of the succeeding claims.

9. A validation system (1) for validating the authenticity of a security mark (2) on a recyclable container (3), said system comprising
conveying means (4) for conveying said recyclable container (3) in said validation system (1), **characterized by**
one or more security mark detection means (5) arranged to detect more than one reflection value (R1, R2) of said security mark (2),
a first light source (6) arranged to illuminate said security mark (2) with light within a first wavelength range (13),
a second light source (7) arranged to illuminate said security mark with light within a second wavelength range (14), wherein said first wavelength range is different from said second wavelength range,
transferring means (8) for transferring said reflection values (R1, R2) from said one or more security mark detection means (5) to
a central validation unit (9) arranged to check if said first reflection value (R1) and said second reflection value (R2) are within predefined ranges.

10. A validation system according to claim 9, wherein said security mark detection means (5) comprises a camera (10) and picture analysing means (11).

11. A validation system according to claim 9 or 10, wherein said one or more security mark detection means (5) comprises more than three security mark detection means (5) arranged in a circular array around said conveying means (4).

12. A validation system according to any of claims 9 to 11, wherein said one or more security mark detection means (5) comprises more than three first light sources (6) arranged in a circular array around said conveying means (4) and more than three second light sources (7) also arranged in a circular array around said conveying means (4).

13. A validation system according to any of claims 9 to 12, wherein said security mark (2) is arranged to be visible when illuminated with light within said first wavelength range (13) and when illuminated with light within said second wavelength range (14).

14. A validation system according to any of claims 9 to 13, wherein said central validation unit (9) comprises memory means (12) in which said predefined ranges are stored.

15. A validation system according to any of claims 9 to 14, wherein the first wavelength range (13) is contained within a visible spectrum and wherein the second wavelength range (14) is contained within an infra-red spectrum.

## Patentansprüche

1. Verfahren zum Validieren der Authentizität einer Sicherheitsmarkierung (2) auf einem wiederverwendbaren Behälter (3), wobei das Verfahren die folgenden Schritte umfasst:
• Vorbeibewegen des wiederverwendbaren Behälters an einem oder mehreren Sicherheitsmarkierungs-Detektionsmitteln (5),
• Beleuchten mindestens eines Teils der Sicherheitsmarkierung mit Licht innerhalb eines ersten Wellenlängenbereichs (13), **gekennzeichnet durch**
• Detektieren eines ersten Reflexionswerts (R1) der Sicherheitsmarkierung mittels des Sicherheitsmarkierungs-Detektionsmittels, wenn die Sicherheitsmarkierung mit Licht innerhalb des ersten Wellenlängenbereichs (13) beleuchtet wird,
• Übertragen des ersten Reflexionswerts von dem Detektionsmittel (5) an eine zentrale Validierungseinheit (9),
• Beleuchten mindestens eines Teils der Sicherheitsmarkierung mit Licht innerhalb eines zweiten Wellenlängenbereichs (14), wobei sich der erste Wellenlängenbereich (13) von dem zweiten Wellenlängenbereich (14) unterscheidet,
• Detektieren eines zweiten Reflexionswerts (R2) der Sicherheitsmarkierung mittels des Sicherheitsmarkiemngs-Detektionsmittels (5), wenn die Sicherheitsmarkierung mit Licht innerhalb des zweiten Wellenlängenbereichs (14) beleuchtet wird,
• Übertragen des zweiten Reflexionswerts von dem Detektionsmittel (5) an die zentrale Validierungseinheit (9), und
• Validieren der Authentizität der Sicherheitsmarkierung (2) in der zentralen Validierungseinheit (9) durch Überprüfung, ob der erste Reflexionswert (R1) und der zweite Reflexionswert (R2) innerhalb vordefinierter Bereiche liegen.

2. Verfahren nach Anspruch 1, wobei das Licht innerhalb des ersten Wellenlängenbereichs (13) ausgeschaltet wird, bevor die Sicherheitsmarkierung mit Licht innerhalb des zweiten (14) Wellenlängenbereichs beleuchtet wird.

3. Verfahren nach Anspruch 1 oder 2, wobei das Licht innerhalb des ersten Wellenlängenbereichs (13) von einer ersten Lichtquelle (6) erzeugt wird und wobei das Licht innerhalb des zweiten Wellenlängenbereichs (14) von einer zweiten Lichtquelle (7) erzeugt wird.

4. Verfahren nach einem der vorhergehenden Ansprüche, wobei dasselbe oder mehrere Sicherheitsmarkierungs-Detektionsmittel (5) sowohl den ersten Reflexionswert (R1) als auch den zweiten Reflexionswert (R2) detektiert.

5. Verfahren nach einem der vorhergehenden Ansprüche, wobei das Verfahren ferner die folgenden Schritte umfasst:
• Beleuchten mindestens eines Teils der Sicherheitsmarkierung (2) mit Licht innerhalb eines dritten Wellenlängenbereichs (15),
• Detektieren eines dritten Reflexionswerts der Sicherheitsmarkierung (2) mittels des Sicherheitsmarkiemngs-Detektionsmittels (5), wenn die Sicherheitsmarkierung mit Licht innerhalb des dritten Wellenlängenbereichs (15) beleuchtet wird, und
• Übertragen des dritten Reflexionswerts von dem Detektionsmittel (5) an die zentrale Validierungseinheit (9).

6. Verfahren nach einem der vorhergehenden Ansprüche, wobei die Reflexionswerte detektiert werden durch:
• Erfassen eines oder mehrerer Bilder des wiederverwendbaren Behälters (3) mittels des Sicherheitsmarkierungs-Detektionsmittels (5),
• Analysieren des einen oder mehrerer Bilder in dem Sicherheitsmarkierungs-Detektionsmittel, um mindestens einen Teil der Sicherheitsmarkierung (2) zu identifizieren, und
• Festlegen der Reflexionswerte (R1, R2) auf der Basis eines Graustufenwerts des mindestens einen Teils der Sicherheitsmarkierung (2).

7. Verfahren nach einem der vorhergehenden Ansprüche, wobei die Reflexionswerte (R1, R2) mitlaufend detektiert werden, während der wiederverwendbare Behälter (3) an dem einen oder mehreren Sicherheitsmarkierungs-Detektionsmitteln (5) vorbeibewegt wird.

8. Verfahren nach einem der vorhergehenden Ansprüche, wobei die Authentizität der Sicherheitsmarkierung (2) mittels eines Validierungssystems (1) nach einem der nachfolgenden Ansprüche validiert wird.

9. Validierungssystem (1) zum Validieren der Authentizität einer Sicherheitsmarkierung (2) auf einem wiederverwendbaren Behälter (3), wobei das System
Fördermittel (4) zum Fördern des wiederverwendbaren Behälters (3) in dem Validierungssystem (1) umfasst,
**gekennzeichnet durch**
ein oder mehrere Sicherheitsmarkierungs-Detektionsmittel (5), das/die so angeordnet ist/sind, dass mehr als ein Reflexionswert (R1, R2) der Sicherheitsmarkierung (2) detektiert wird,
eine erste Lichtquelle (6), die angeordnet ist, um die Sicherheitsmarkierung (2) mit Licht innerhalb eines ersten Wellenlängenbereichs (13) zu beleuchten,
eine zweite Lichtquelle (7), die angeordnet ist, um die Sicherheitsmarkierung mit Licht innerhalb eines zweiten Wellenlängenbereichs (14) zu beleuchten, wobei sich der erste Wellenlängenbereich von dem zweiten Wellenlängenbereich unterscheidet,
Übertragungsmittel (8) zum Übertragen der Reflexionswerte (R1, R2) von dem einen oder mehreren Sicherheitsmarkierungs-Detektionsmitteln (5) an eine zentrale Validierungseinheit (9), die angeordnet ist, um zu überprüfen, ob der erste Reflexionswert (R1) und der zweite Reflexionswert Wert (R2) innerhalb vordefinierter Bereiche liegen.

10. Validierungssystem nach Anspruch 9, wobei das Sicherheitsmarkierungs-Detektionsmittel (5) eine Kamera (10) und Bildanalysemittel (11) umfasst.

11. Validierungssystem nach Anspruch 9 oder 10, wobei das eine oder mehrere Sicherheitsmarkiemngs-Detektionsmittel (5) mehr als drei Sicherheitsmarkiemngs-Detektionsmittel (5) umfasst, die in einer kreisförmigen Anordnung um das Fördermittel (4) herum angeordnet sind.

12. Validierungssystem nach einem der Ansprüche 9 bis 11, wobei das eine oder mehrere Sicherheitsmarkierungs-Detektionsmittel (5) mehr als drei erste Lichtquellen (6), die in einer kreisförmigen Anordnung um das Fördermittel (4) herum angeordnet sind, und mehr als drei zweite Lichtquellen (7), die ebenfalls in einer kreisförmigen Anordnung um das Fördermittel (4) herum angeordnet sind, umfasst.

13. Validierungssystem nach einem der Ansprüche 9 bis 12, wobei die Sicherheitsmarkierung (2) so angeordnet ist, dass sie sichtbar ist, wenn sie mit Licht innerhalb des ersten Wellenlängenbereichs (13) beleuchtet wird und wenn sie mit Licht innerhalb des zweiten Wellenlängenbereichs (14) beleuchtet wird.

14. Validierungssystem nach einem der Ansprüche 9 bis 13, wobei die zentrale Validierungseinheit (9) Speichermittel (12) umfasst, in denen die vordefinierten Bereiche gespeichert sind.

15. Validierungssystem nach einem der Ansprüche 9 bis 14, wobei der erste Wellenlängenbereich (13) innerhalb eines sichtbaren Spektrums enthalten ist und wobei der zweite Wellenlängenbereich (14) innerhalb eines Infrarotspektrums enthalten ist.

## Revendications

1. Procédé de validation de l'authenticité d'une marque de sécurité (2) sur un conteneur recyclable (3), ledit procédé comprenant les étapes de :
• déplacement dudit conteneur recyclable devant un ou plusieurs moyens de détection de marque de sécurité (5),
• éclairage d'au moins une partie de ladite marque de sécurité avec de la lumière dans une première plage de longueurs d'onde (13), **caractérisé par**
• la détection d'une première valeur de réflexion (R1) de ladite marque de sécurité au moyen desdits moyens de détection de marque de sécurité lorsque ladite marque de sécurité est éclairée avec de la lumière dans ladite première plage de longueurs d'onde (13),
• transmission de ladite première valeur de réflexion depuis lesdits moyens de détection (5) à une unité centrale de validation (9),
• éclairage d'au moins une partie de ladite marque de sécurité avec de la lumière dans une deuxième plage de longueurs d'onde (14), dans laquelle ladite première plage de longueurs d'onde (13) est différente de ladite deuxième plage de longueurs d'onde (14),
• détection d'une deuxième valeur de réflexion (R2) de ladite marque de sécurité au moyen des moyens de détection de marque de sécurité (5) lorsque ladite marque de sécurité est éclairée avec la lumière dans ladite deuxième plage de longueurs d'onde (14),
• transmission de ladite deuxième valeur de réflexion depuis lesdits moyens de détection (5) à ladite unité centrale de validation (9), et
• validation de l'authenticité de ladite marque de sécurité (2) dans ladite unité centrale de validation (9) par une vérification si ladite première valeur de réflexion (R1) et ladite deuxième valeur de réflexion (R2) se situent dans des plages prédéfinies.

2. Procédé selon la revendication 1, dans lequel ladite lumière dans ladite première plage de longueurs d'onde (13) est éteinte avant que ladite marque de sécurité ne soit éclairée avec la lumière dans ladite deuxième (14) plage de longueurs d'onde.

3. Procédé selon la revendication 1 ou 2, dans lequel ladite lumière dans ladite première plage de longueurs d'onde (13) est générée par une première source lumineuse (6) et dans lequel ladite lumière dans ladite deuxième plage de longueurs d'onde (14) est générée par une deuxième source lumineuse (7).

4. Procédé selon l'une quelconque des revendications précédentes, dans lequel les mêmes un ou plusieurs moyens de détection de marque de sécurité (5) détectent à la fois ladite première valeur de réflexion (R1) et ladite deuxième valeur de réflexion (R2).

5. Procédé selon l'une quelconque des revendications précédentes, dans lequel ledit procédé comprend en outre les étapes de :
• éclairage d'au moins une partie de ladite marque de sécurité (2) avec de la lumière dans une troisième plage de longueurs d'onde (15),
• détection d'une troisième valeur de réflexion de ladite marque de sécurité (2) au moyen desdits moyens de détection de marque de sécurité (5) lorsque ladite marque de sécurité est éclairée avec la lumière dans ladite troisième plage de longueurs d'onde (15), et
• transmission de ladite troisième valeur de réflexion depuis lesdits moyens de détection (5) à ladite unité centrale de validation (9).

6. Procédé selon l'une quelconque des revendications précédentes, dans lequel lesdites valeurs de réflexion sont détectées par :
• la capture d'une ou plusieurs images dudit conteneur recyclable (3) au moyen desdits moyens de détection de marque de sécurité (5),
• analyse desdites une ou plusieurs images dans lesdits moyen de détection de marque de sécurité pour identifier au moins une partie de ladite marque de sécurité (2), et
• établissement desdites valeurs de réflexion (R1, R2) sur la base d'une valeur d'échelle de gris de ladite au moins une partie de ladite marque de sécurité (2).

7. Procédé selon l'une quelconque des revendications précédentes, dans lequel lesdites valeurs de réflexion (R1, R2) sont détectées à la volée lorsque ledit conteneur recyclable (3) est déplacé devant lesdits un ou plusieurs moyens de détection de marque de sécurité (5).

8. Procédé selon l'une quelconque des revendications précédentes, dans lequel ladite authenticité de ladite marque de sécurité (2) est validée au moyen d'un système de validation (1) selon l'une quelconque des revendications suivantes.

9. Système de validation (1) pour valider l'authenticité d'une marque de sécurité (2) sur un conteneur recyclable (3), ledit système comprenant
un moyen de convoyage (4) pour convoyer ledit conteneur recyclable (3) dans ledit système de validation (1),
**caractérisé par**
un ou plusieurs moyens de détection de marque de sécurité (5) agencés pour détecter plus d'une valeur de réflexion (R1, R2) de ladite marque de sécurité (2),
une première source lumineuse (6) agencée pour éclairer ladite marque de sécurité (2) avec de la lumière dans une première plage de longueurs d'onde (13),
une deuxième source lumineuse (7) agencée pour éclairer ladite marque de sécurité avec de la lumière dans une deuxième plage de longueurs d'onde (14), dans lequel ladite première plage de longueurs d'onde est différente de ladite deuxième plage de longueurs d'onde,
un moyen de transfert (8) pour transférer lesdites valeurs de réflexion (R1, R2) depuis lesdits un ou plusieurs moyens de détection de marque de sécurité (5) à une unité centrale de validation (9) agencée pour vérifier si ladite première valeur de réflexion (R1) et ladite deuxième valeur de réflexion (R2) se situent dans des plages prédéfinies.

10. Système de validation selon la revendication 9, dans lequel lesdits moyens de détection de marque de sécurité (5) comprennent une caméra (10) et un moyen d'analyse d'image (11).

11. Système de validation selon la revendication 9 ou 10, dans lequel lesdits un ou plusieurs moyens de détection de marque de sécurité (5) comprennent plus de trois moyens de détection de marque de sécurité (5) agencés en un réseau circulaire autour desdits moyens de convoyage (4).

12. Système de validation selon l'une quelconque des revendications 9 à 11, dans lequel lesdits un ou plusieurs moyens de détection de marque de sécurité (5) comprennent plus de trois premières sources lumineuses (6) disposées en un réseau circulaire autour dudit moyen de convoyage (4) et plus de trois deuxièmes sources lumineuses (7) également disposées en un réseau circulaire autour dudit moyen de convoyage (4).

13. Système de validation selon l'une quelconque des revendications 9 à 12, dans lequel ladite marque de sécurité (2) est conçue pour être visible lorsqu'elle est éclairée avec de la lumière dans ladite première plage de longueurs d'onde (13) et lorsqu'elle est éclairée avec de la lumière dans ladite deuxième plage de longueurs d'onde (14).

14. Système de validation selon l'une quelconque des revendications 9 à 13, dans lequel ladite unité centrale de validation (9) comprend un moyen de mémoire (12) dans lequel lesdites plages prédéfinies sont stockées.

15. Système de validation selon l'une quelconque des revendications 9 à 14, dans lequel la première plage de longueurs d'onde (13) est contenue dans un spectre visible et dans lequel la deuxième plage de longueurs d'onde (14) est contenue dans un spectre infrarouge.
